# EUROPEAN PATENT APPLICATION

(11) **EP 2 181 897 A2**
(43) Date of publication of application: **05.05.2010**
(21) Application number: 09013591.4
(22) Date of filing: 28.10.2009
(51) Int. Cl.: B60R 11/02

(54) **Panel attitude changing system and electronic system and electronic equipment with panel attitude changing system**

(30) Priority: 30.10.2008 JP 2008280108
(71) Applicant: Victor Company of Japan, Limited, Yokohama, Kanagawa-ken (JP)
(72) Inventor: Ogawa, Motoharu, Yokohama Kanagawa-ken (JP)
(74) Representative: Wagner, Karl H.

(57) **Abstract**

A movable base (4) is adapted to pivot about first pivotal shafts (Sx ...), a panel holder (6) configured to hold a panel (2) is pivotally connected to the movable base (4) through second pivotal shafts (Sy...) perpendicular to the first pivotal shafts (Sx...), and a holder drive mechanism (5) arranged on the movable base (4) is configured for the panel holder (6) to pivot about the second pivotal shifts (Sy...).

## Description

### BACKGROUND OF THE INVENTION

### 1. Field of the Invention

The present invention addresses a technique to implement a desirable orientation of a panel, such as a liquid crystal display panel (referred herein to an LCD panel), a panel-form speaker, or an operational panel, and relates to a panel attitude changing system, in particular to that suitable for vehicular electronic equipments provided with such a type of panel at a front of an equipment casing main body.

### 2. Description of the Related Art

As well-known conventional vehicular electronic equipments such as a car audio or car navigation system, there are those provided with an operational panel having a display screen or a display panel such as an LCD panel, at a front of an equipment casing main body to be fixed in a vehicle interior. Most of electronic equipments of such a type are arranged to a center console in a vehicle interior, and adapted for a user sitting in a driver's seat or front passenger's seat to look a front face of the panel (such as a display screen) from an angle, not from an anterior. To this point, there have been studies to provide a display screen with an enlarged visual angle. However, even though given an enlarged visual angle of display screen, some panels have an operational portion operable from an angle such as from a driver's seat, leaving a room of improvement for the operability to be enhanced.

In this respect, there are know configurations adapted to change a normal direction (referred herein to an "orientation") of a panel vertically and sideways, for enhancement of operability of an operational portion as well as visibility of a display screen of the panel.

Japanese Patent Application Laid-Open Publication No. 2007-245930 discloses a vehicular equipment, in which a holder for supporting a panel and an equipment casing main body are interconnected by drive mechanisms, which are operative to change the orientation of the holder as well as the panel supported by the holder vertically and sideways.

### SUMMARY OF THE INVENTION

In the vehicular equipment disclosed in the patent document-1, the drive mechanisms operative to change the orientation of the panel are each configured with a complex cam mechanism including a pair of arms as following nodes connected to the holder, and a cam plate adapted for a forward rotation and a reverse rotation to bring the pair of arms in defined motions, and they are arranged at both right and left of the equipment casing main body, needing a large number of component parts and a space for their arrangement, constituting difficulties to equipment down-sizing and cost reduction.

Further, for the drive mechanism, the cam plate has curvilinear cam grooves that are continuously formed therein to bring the pair of arms in defined motions, and may be difficult in design, consuming much time for assembly of the component parts, as well.

Further, according to the patent document-1, assuming a state of the panel inclined in an anteroposterior direction, for instance, in order for the panel face to be oriented sideways, the panel is unable to directly turn sideways with a maintained anteroposterior inclination, but instead it is to go through an upright attitude to turn sideways. That is, the configuration in the patent document-1 is inadaptable for any action to simultaneously change the orientation of the panel face vertically and sideways, and the orientation of the panel face is restricted simply to a selective one of horizontal and vertical directions. Therefore, for a point of view positioned obliquely upwardly off from the panel face, the panel face is unable to provide an anterior view to the viewpoint, so it has a deteriorated visibility to the viewpoint, as an issue.

The present invention has been devised in view of such problems, and an object thereof is to provide a panel attitude changing system with a simplified structure that allows, even in application to an electronic equipment provided with a panel and arranged to a center console in a vehicle interior, for instance, for a favorable acquisition of an output (such as an audio or video) from the panel irrespective of the user's position, as well as favorable operations as necessary thereto.

To achieve the object described, according to an aspect of the present invention, a panel attitude changing system is characterized by a movable base adapted to pivot about first pivotal shafts, a panel holder configured to hold a panel and pivotally connected to the movable base through second pivotal shafts perpendicular to the first pivotal shafts, and a holder drive mechanism arranged on the movable base and configured for the panel holder to pivot about the second pivotal shafts.

According to another aspect of the present invention, the above-noted panel attitude changing system is **characterized in that** the holder drive mechanism comprises operational plates adapted to lie and stand between the movable base and the panel holder, a rotary drive source configured to generate power for the operational plates to lie and stand, and a power train configured for transmission of power with conversion of rotary motions of the rotary drive source to lying and standing motions of the operational plates, and is adapted, as an operational plate stands with power transmitted by the power train, for the panel holder to pivot about the second pivotal shafts to come out anteriorly at an end thereof the operational plate is standing.

To achieve the object described, according to another aspect of the present invention, a panel attitude changing system is characterized by a stationary base, a panel holder configured to hold a panel and pivotally connected to the stationary base through pivotal shafts, and a holder drive mechanism arranged on the stationary base and configured for the panel holder to pivot about the pivotal shafts, the holder drive mechanism comprising operational plates adapted to lie and stand between the stationary base and the panel holder, a rotary drive source configured to generate power for the operational plates to lie and stand, and a power train configured for transmission of power with conversion of rotary motions of the rotary drive source to lying and standing motions of the operational plates, the holder drive mechanism being adapted, as an operational plate stands with power transmitted by the power train, for the panel holder to pivot about the pivotal shafts to come out anteriorly at an end thereof the operational plate is standing.

According to another aspect of the present invention, the above-noted panel attitude changing system is **characterized in that** the panel has a display adapted to display a frame of image, and is detachably attached to the panel holder.

According to another aspect of the present invention, an electronic equipment is characterized by the above-noted panel attitude changing system, with the panel positioned at an end of an equipment casing main body.

### BRIBF DESCRIPTION OF THE DRAWINGS

Fig. 1 is a perspective view of an electronic equipment with a panel including a panel attitude changing system according to an embodiment of the present invention.
Fig. 2 is a perspective view of the electronic equipment with the panel oriented upward.
Fig. 3 is a perspective view of the electronic equipment with the panel oriented rightward.
Fig. 4 is a perspective view of the electronic equipment with the panel oriented upwardly rightward.
Fig. 5 is a schematic plan view of an internal structure of an equipment casing main body.
Fig. 6 is a front view of a movable base with a holder drive mechanism mounted thereon.
Fig. 7A and Fig. 7B are side views of the movable base in pivotal motions.
Fig. 8 is a front view of the holder drive mechanism in operation.
Fig. 9 is a sectional top view of the movable base connected with the panel holder.
Fig. 10 is a sectional top view of the panel holder in pivotal motion.
Fig.11 is a front view of the panel holder.
Fig.12 is a rear view of the panel.
Fig. 13 is a sectional side view of the panel held by panel holder.
Fig. 14 is a fractional sectional side view of the panel held by panel holder.
Fig. 15 is a fractional sectional side view of the panel in the course of removal from the panel holder.
Fig. 16 is a sectional side view of a panel attitude changing system according to another embodiment of the present invention.

### DETAILED DESCRIPTION OF THE PREFERRED EMBODIMENTS

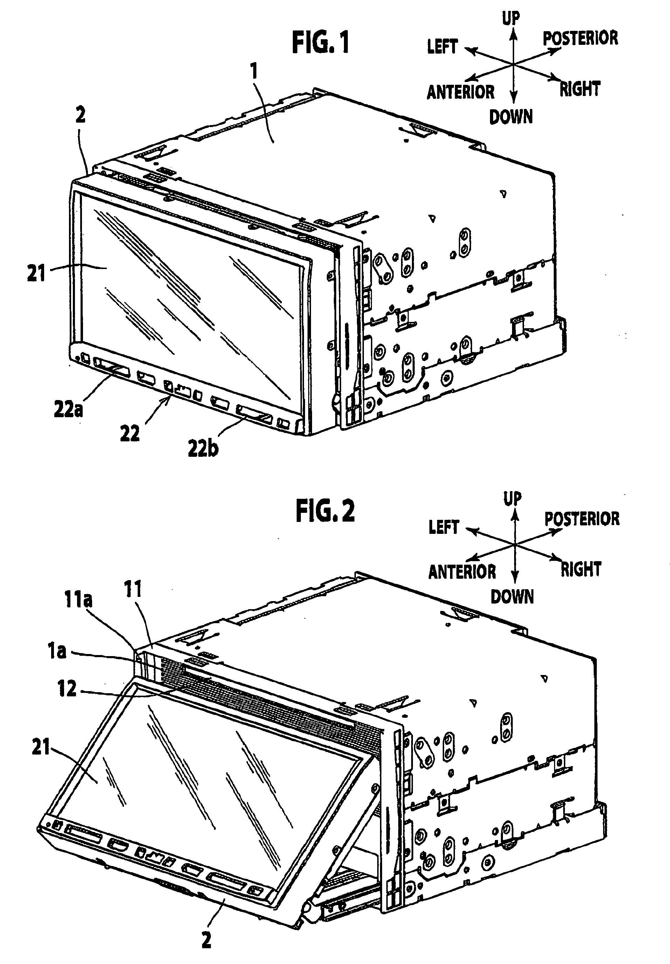

There will be described below into details the preferred embodiments of the prevent invention, with reference to the accompanying drawings. Fig. 1 is a perspective view of an electronic equipment with a panel including a panel attitude changing system according to an embodiment of the present invention.

In the embodiment of Fig. 1, the electronic equipment is a vehicular AV (audio and visual) device. Designated at reference character 1 is an equipment casing main body, and 2 is a panel unit (referred herein simply to a panel) provided at an end (the front end) of the casing main body 1.

The panel 2 is a display panel (an LCD panel in this embodiment) that has a display portion 21 configured to display a frame of image, and an operational portion 22 extending along a lower edge of an outside of the display portion 21. The operational portion 22 is configured for signal inputs to an unshown controller in the casing main body 1, and has operational switches such as a main power switch and a volume control switch, including select switches 22a and 22b operable to change the orientation of a front face of the panel (i.e., of the display portion 21). It is noted that the operational portion 22 may be configured as a touch panel to incorporate into the display portion 21.

According to the present embodiment, assuming an initial position of the panel 2 as an attitude standing upright alongside a front end of the casing main body 1 as illustrated in Fig. 1, the orientation of the panel face is changeable about later-described mutually orthogonal two axes Sx and Sy (upwardly and downwardly, and rightwardly and leftwardly, for instance), by pressing operations to the select switches 22a and 22b. It is noted that, in this embodiment, the panel face is described as changeable upwardly and downwardly, and rightwardly and leftwardly, while the changeable direction is variable in dependence on how the electronic equipment is arranged.

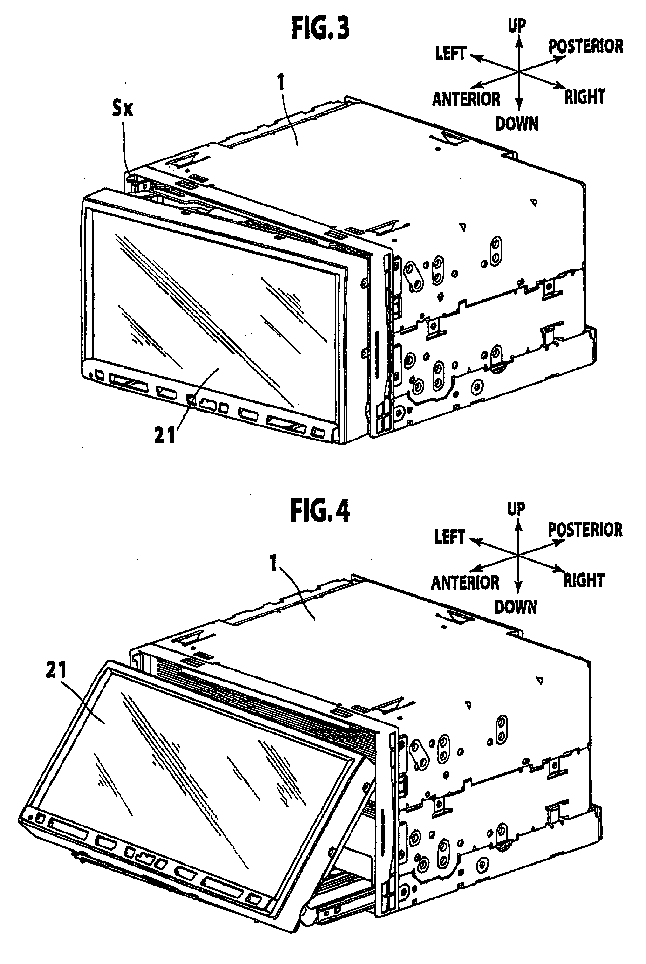

Fig. 2 illustrates a state of the panel declined rearwards with the panel face turned upward (in an up-oriented position), where the panel 2 has come out at a lower end thereof anteriorly from the initial position, as it has pivoted about a pair of first pivotal shafts Sx shown in Fig. 3 that are horizontal shafts oriented rightward and leftward. The first pivotal shafts Sx are movable fulcrums for the panel 2 to pivot thereabout, which are slidably supported by guide grooves 11a formed in insides of right and left walls of a main body frame 11 that encloses a front face 1a of the casing main body 1.

As illustrated in Fig. 2, the front face 1a of the casing main body 1 has a slit-shape opening 12 formed therein, which appears when the panel 2 is oriented upward, allowing for a recording medium (a disc such as CD or DVD) to be inserted and taken out therethrough. The casing main body 1 has an unshown drive unit installed therein for reproducing information recorded in the recording medium, whereby for instance an audio signal is read from the recording medium to output to a speaker in the vehicle interior, or a video signal such as of map information read therefrom is input to the display portion 21 of the panel 2 to display thereon.

Fig. 3 illustrates a state of the panel having the panel face turned rightward (in a right-oriented position), where the panel 2 has come out at a left end thereof anteriorly from the initial position, as it has pivoted about an associate pair of second pivotal shafts Sy that are vertical shafts oriented upward and downward perpendicularly to the first pivotal shafts Sx. In the present embodiment, this panel 2 is movable for an upward pivot to have such an attitude as illustrated in Fig. 4, with an orientation of the panel face maintained rightward as in Fig. 3, while it also is possible to have a maintained leftward orientation. From this state where the panel face is in an upper right-oriented position as in Fig. 4, the panel 2 is still movable for a left-handed pivot in order to set the panel face in an up-oriented position or an upper left-oriented position.

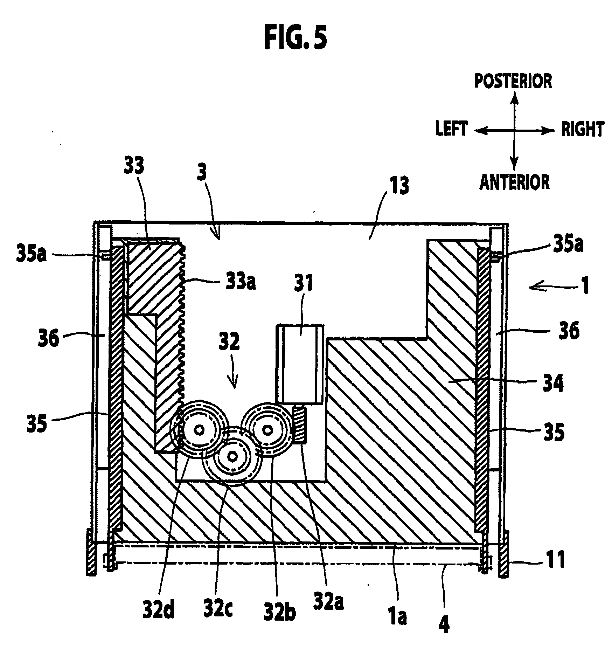

Description is now made of a specific configuration of the panel attitude changing system that permits various attitude-changing actions (face-orienting motions) of the panel 2. Fig. 5 is a schematic plan view of an internal structure of the casing main body 1. As illustrated in Fig. 5, the casing main body 1 has a base drive mechanism 3 arranged therein as a driving system for causing the orientation of the panel face to change vertically. In Fig. 5, the base drive mechanism 3 includes a reversible motor 31 as a drive power source, a speed reducing gear train 32 to be driven by the reversible motor 31, and a rack 33 to be driven by the gear train 32 to reciprocate in a longitudinal direction along a bottom of the casing main body 1.

The speed-reducing gear train 32 is made up by a worm gear 32a fixed on a rotor shaft of the reversible motor 31, a first gear 32b meshing at a worm wheel portion thereof with the worm gear 32a, a second gear 32c meshing at a large-diameter gear portion thereof with a small-diameter gear portion of the first gear 32b, and a third gear 32d meshing at a large-diameter gear portion thereof with a small-diameter gear portion of the second gear 32c, the third gear 32d having a small-diameter gear portion thereof meshing with a gear portion 33a of the rack 33.

The rack 33 is fixed to a base plate 34, which has right and left arm members 35 attached to both sides thereof. The base plate 34 is longitudinally slidably supported by right and left guide rails 36 fixed to a bottom member of a chassis 13 as an armoring of the casing main body 1. Both arm members 35 have distal ends thereof protruded outside through the front face 1a of the casing main body 1 in which the opening 12 is formed. The arm members 35 are connected at the distal ends by a movable base 4.

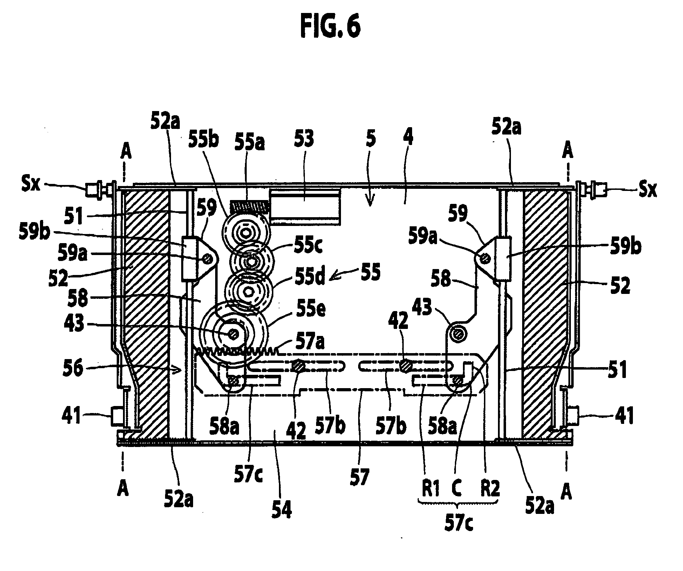

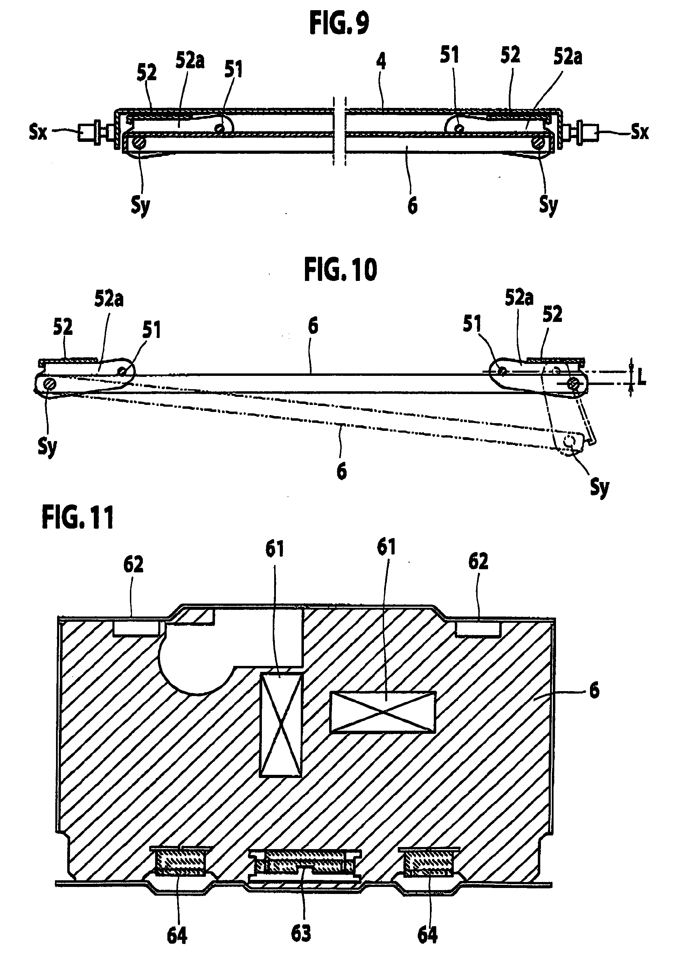

As illustrated in Fig. 6, the movable base 4 is formed as a rectangular planer metallic member, on which a holder drive mechanism 5 is mounted for driving a panel holder 6 shown in Fig.11 to pivot about the second pivotal shafts Sy (lying on right and left vertical lines A-A in Fig. 6), thereby causing the panel face to turn sideways. The movable base 4 has, at both right and left edges thereof, the pivotal shafts Sx rightwardly and leftwardly protruding from upper ends thereof, and link pins 41 rightwardly and leftwardly protruding from lower ends thereof; respectively.

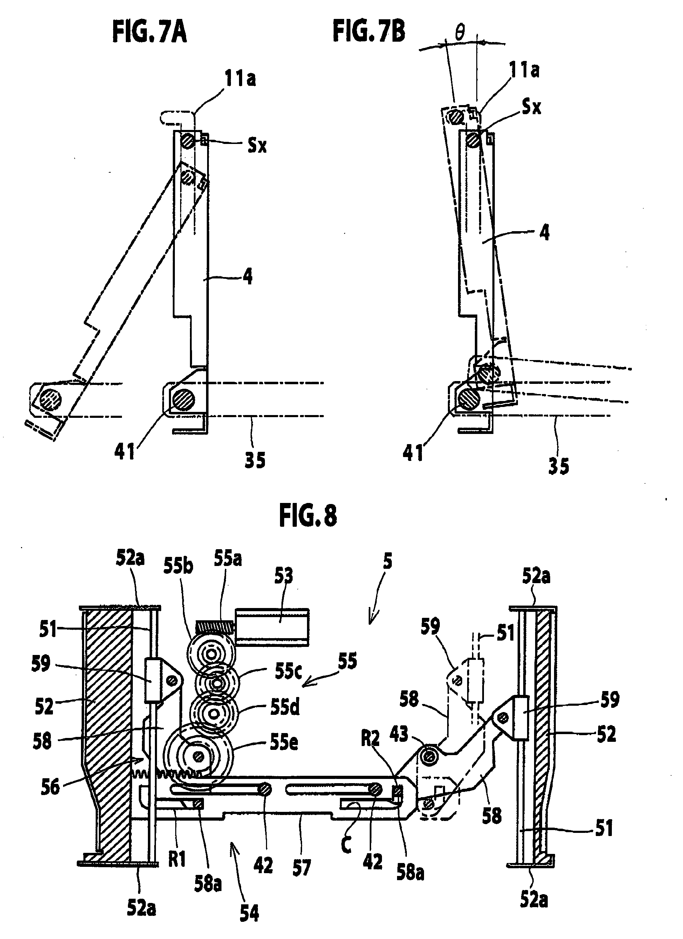

For the movable base 4, as illustrated in Fig. 7A and Fig. 7B, the first pivotal shafts Sx at the upper ends are fit in the guide grooves 11a (refer to Fig. 2) of the casing main body 1, whereby the movable base 4 is supported to be pivotal about the pivotal shafts Sx, while the link pins 41 at the lower ends are linked for articulation with distal ends of the arm members 35. As the arm members 35 go forward as illustrated in Fig. 7A, the link pins 41 are pushed and come out anteriorly, causing the movable base 4 to pivot about the first pivotal shafts Sx sliding downward along the guide grooves 11a, so the movable base 4 is declined to give the panel face an up-oriented position.

On the other hand, as the arm members 35 go backward as illustrated in Fig. 7B, the link pins 41 are pulled and get back posteriorly, causing the movable base 4 to pivot about the first pivotal shafts Sx sliding upward along the guide grooves 11a, so the movable base 4 is inclined from an upright posture for instance to an anteverted posture, whereto an angle θ of anteversion is set to approximately 8 degrees in this embodiment.

In order to enable the movable base 4 to take such an anteverted posture as illustrated in Fig. 7B without interferences with the casing main body 1, the guide grooves 11a are bent anteriorly at their upper ends, thereby permitting the arm members 35 to swing upward at the distal ends as illustrated in Fig. 7B. In order to enable the arm members 35 to swing upward, the arm members 35 are provided at their rear ends with pins 35a (refer to Fig. 5) to be guided inside unshown recesses formed in the guide rails 36.

Description is now made of a configuration of the holder drive mechanism 5. As illustrated in Fig. 6 and Fig. 8, the holder drive mechanism 5 includes right and left movable shafts 51 as pivotal rod members extending close to a planer base portion (as a principal plane) of the movable base 4, right and left operational plates 52 adapted for lying and standing motions (illustrated in Fig. 9 and Fig. 10) about those movable shafts 51, respectively, a reversible motor 53 fixed to the planer base portion of the movable base 4 as a rotary drive source for generating power for the operational plates 52 to be thereby driven to lie and stand, and a power train 54 configured for transmission of power from the reversible motor 53 to the operational plates 52.

Each operational plate 52 is formed as a strip-shaped metallic plate that is bent at right angles at both upper and lower ends thereof to inwardly extend as upper and lower link pieces 52a, which cooperatively support a corresponding one of the movable shafts 51 extending therebetween.

The power train 54 includes a speed-reducing gear train 55 to be driven by the reversible motor 53, and a power transmission selector 56 for separately transmitting power of the speed-reducing gear train 55 to the right and left operational plates 52.

The speed-reducing gear train 55 is made up by a worm gear 55a fixed on a rotor shaft of the reversible motor 53, a first gear 55b meshing at a worm wheel portion thereof with the worm gear 32a, a second gear 55c meshing at a large-diameter gear portion thereof with a small-diameter gear portion of the first gear 55b, a third gear 55d meshing at a large-diameter gear portion thereof with a small-diameter gear portion of the second gear 55c, and a fourth gear 55e meshing at a large-diameter gear portion thereof with a small-diameter gear portion of the third gear 55d, the fourth gear 55e having a small-diameter gear portion thereof operatively connected for power transmission to the power transmission selector 56. The first to fourth gears 55b - 55e are rotatively mounted on a principal plane portion of the movable base 4.

The power transmission selector 56 includes a rack 57 adapted to move sideways along a principal plane of the movable base 4, and right and left swingable levers 58 operatively engaged with the rack 57.

The rack 57 is a strip-sbape planer member that has a gear portion 57a extending along a side edge at one end thereof to mesh with a small-diameter gear portion of the fourth gear 55e. The rack 57 is formed with right and left straight-linear elongate holes 57b extending in a longitudinal direction thereof, and right and left L-shape cam grooves 57c that are each respectively provided as a connected combination of a first path R1 in parallel with a corresponding elongate hole 57b, a second path R2 non-parallel with the elongate hole 57b, and a corner C in between. There are right and left guide pins 42 protruded from the movable base 4 and slidably fit in the right and left elongate holes 57b, respectively. The right and left swingable levers 58 have convex portions 58a projecting therefrom as cam followers slidably engaged with the right and left cam grooves 57c, respectively.

The right and left swingable levers 58 are pivotal, for swing motions in parallel with the principal plane of the movable base 4, about right and left pivots provided as fixed nodes 43 for articulation on the movable base 4, respectively, while one node 43 concurrently serves as a support shaft for the fourth gear 55e to revolve therearound. In this embodiment, the right and left swingable levers 58 have the convex portions 58a at locations thereon lower than the right and left nodes 43, respectively, and right and left slide heads 59 vertically pivotally attached thereto at locations thereon higher than the right and left nodes 43, respectively. Those locations may be reversed vice versa, subject to a secured sufficient spacing in between for later-described motions to be effective.

The right and left slide heads 59 are small-piece elements that are pivotal at proximal ends thereof, for swing motions in parallel with the right and left swingable levers 58, about pivots provided as fixed nodes 59a for articulation on the swingable levers 58, respectively. The right and left slide heads 59 have tubular bearing portions 59b formed, for the right and left movable shafts 51 to be provided therethrough, at distal ends thereof offset ahead of the proximal ends to avoid interferences between the movable shafts 51 and the swingable levers 58, respectively. The bearing portions 59b are slidably fit along the lengths on the right and left movable shafts 51.

The right and left operational plates 52 are pivotally supported on the panel holder 6 by means of right and left pairs of upper and lower second pivotal shafts Sy interposed in between, respectively (refer to Fig. 9 and Fig. 10). In this embodiment, the second pivotal shafts Sy are all projected from corresponding parts of the panel holder 6, while they may be projected from operational plates 52, as necessary.

In the holder drive mechanism 5 described, as the reversible motor 53 rotates in a direction, the rack 57 is driven to move straight-linearly in a corresponding sense with drive power transmitted through the speed-reducing gear train 55.

Assuring the sense of movement to be leftward, as illustrated in Fig. 8, the left swingable lever 58 located on that side where the rack 57 is coming up is put out in an immobile state with the convex portion 58a abutting on a right end of the first path R1 in the left cam groove 57c. Instead, the convex portion 58a of the right swingable lever 58 is guided through the corner C to the second path R2 in the right cam groove 57c, whereby the right swingable lever 58 is forced to pivot about the right node 43 on the movable base 4, for instance from a position of broken lines to a position of solid lines in Fig. 8, causing the slide head 59 to push the light movable shaft 51 rightwardly outward.

As the movable shaft 51 is pushed outward, the right operational plate 52 is forced to pivot about the movable shaft 51 and the right pair of upper and lower second pivotal shafts Sy, so its outer edge is spaced from the movable base 4, for instance from a position illustrated by solid lines in Fig. 10 where it is lying along the principal plane of the movable base 4 to a position illustrated by chain lines in Fig. 10 where it is forwardly standing on the movable base 4.

In other words, the power train 54 constituting the holder drive mechanism 5 is configured for conversion of rotary motions in the speed-reducing gear train 55 to lying and standing motions of the operational plates 52 to oppositely drive the right and left operational plates 52 into lying and standing motions. Under a condition that both right and left operational plates 52 are lying, if the reversible motor 53 is operated in a reverse direction to the above-noted direction, then the operational plate 52 on the opposite side being the left in Fig. 8 is driven to stand, and if the reversible motor 53 is operated in an opposite direction under this condition, then the standing operational plate 52 is driven to lie.

Such the holder drive mechanism 5 is mounted on the movable base 4, where as illustrated in Fig. 9, the panel holder 6 for holding the panel 2 is linked in a manner of covering the principal plane and the holder drive mechanism 5 (represented simply by the right and left operational plates 52 in Fig. 9). The panel holder 6 is pivoted at right and left upper and lower ends thereof on associated link pieces 52a of the operational plates 52 through right and left pairs of upper and lower second pivotal shafts Sy (as short round pins in this embodiment) perpendicular to the first pivotal shafts Sx. The right and left operational plates 52 are driven to alternately lie and stand within a space defined by and between the movable base 4 and the panel holder 6.

The first and second pivotal shafts Sx and Sy are all arranged parallel with the panel face or the principal plane of the movable base 4 or the panel holder 6. As described, the upper and lower link pieces 52a of each operational plate 52 have a movable shaft 51 pivotally supported by and between inner ends thereof, the movable shaft 51 being slidably engaged with a slide head 59 linked with one end of a swingable lever 58 pivoted on a pin 43 fixed to the movable base 4. That is, according to the present embodiment, the panel holder 6 is not directly coupled by left and right pivotal shafts Sy with the movable base 4, but instead it is linked to the movable base 4 through left and right pivotal shafts Sy, operational plates 52, movable shafts 51, slide heads 59, and swingable levers 58.

As either right or left operational plate 52 is driven to stand as illustrated in Fig. 10, the panel holder 6 comes out anteriorly at corresponding one of right and left ends thereof (the right end in Fig. 10), pivoting about pivotal shafts Sy at the opposite end. Each swingable lever 58 has outward pressing forces acting through a slide head 59 on a movable shaft 51 in a panel-transverse direction, whereto associated upper and lower pivotal shafts Sy working as nodes for articulation between an associated operational panel 52 and the panel holder 6 have their locations offset in a panel-longitudinal direction at a prescribed center-to-center distance L, thereby allowing for a smooth standing motion of the operational panel 52.

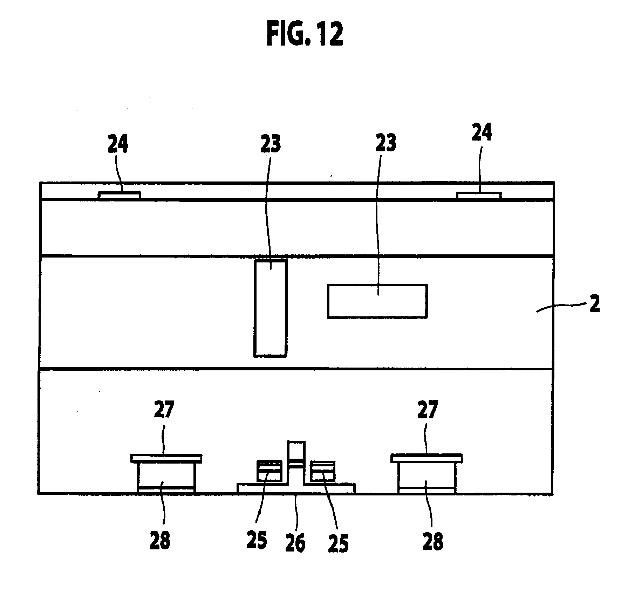

Fig. 11 is a front view of the panel holder 6, and Fig. 12, a rear view of the panel 2 to be held by the panel holder 6. The panel holder 6 is a metallic planer member substantially identical in size to the movable base 4, and has connectors 61 attached to a central portion thereof for interfacing signals to be input to the panel 2, as illustrated in Fig. 11. The panel holder 6 is cut at an upper edge portion thereof to provide right and left locking holes 62, and has in a lower portion thereof a lock lever 63, and right and left auxiliary levers 64 with the lock lever 64 in between.

As illustrated in Fig. 12, the panel 2 has a back face (as an opposite face to the before-mentioned display portion 21) for provision of connectors 23 to be connected for electric conduction to the connectors 61 on the panel holder 6. The panel 2 has a back face, which is formed at an upper portion thereof with projections 24 engageable with the locking holes 62 of the panel holder 62, and has in a lower portion thereof a pair of hooks 25 lockingly engageable with the lock lever 63, and a release lever 26 for releasing a locking engagement between lock lever 63 and hooks 25. It further has a pair of projections 27 for drop-off prevention at locations corresponding to the auxiliary levers 64, with the release lever 26 in between.

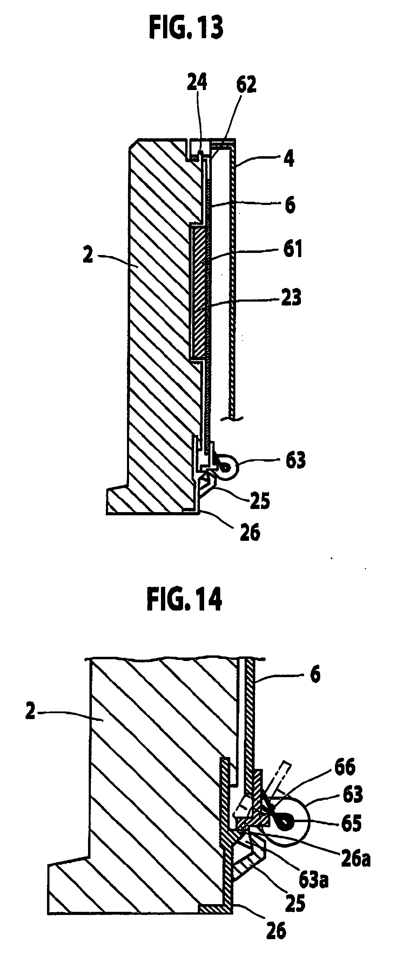

As illustrated in Fig. 13, the panel 2 is fit to the panel holder 6 in a conforming manner with the projections 24 of the panel 2 inserted in the locking holes 62 of the panel holder 6. As the panel 2 is applied to the panel holder 6, their connectors 23 and 61 are fit together for electric conduction, with the lock lever 63 working to prevent the panel 2 from being dropped off.

Fig. 14 is an enlarged fractional sectional view of the panel 2 locked on the panel holder 6 by the lock lever 63. As illustrated in Fig. 14, the lock lever 63 is rotatively supported by an axle 65 fixed to the panel holder 6, and the axle 65 has a spring 66 applied thereto for pressing an upper portion of the lock lever 63 against a backside of the panel holder 6. The lock lever 63 has a pair of locking clicks 63a formed thereon for a locking engagement with the pair of hooks 25 projecting from the back face of the panel 2.

The release lever 26 is vertically slidable along the back face of the panel 2, and spring-biased downwards, and has at a transversely intermediate portion thereof a lock releasing projection 26a engageable for abutment with a recess between locking clicks 63a of the lock lever 63.

For operation, a lower end face of the release lever 26 can be pressed to move the release lever 26 upward, causing the lock releasing projection 26a to push the above-noted recess of the lock lever 63 upward, whereby the lock lever 63 is rotated against repulsive forces of the spring 66, up to an angular position illustrated by chain lines in Fig. 14, where the locking clicks 63a are released from the hooks 25.

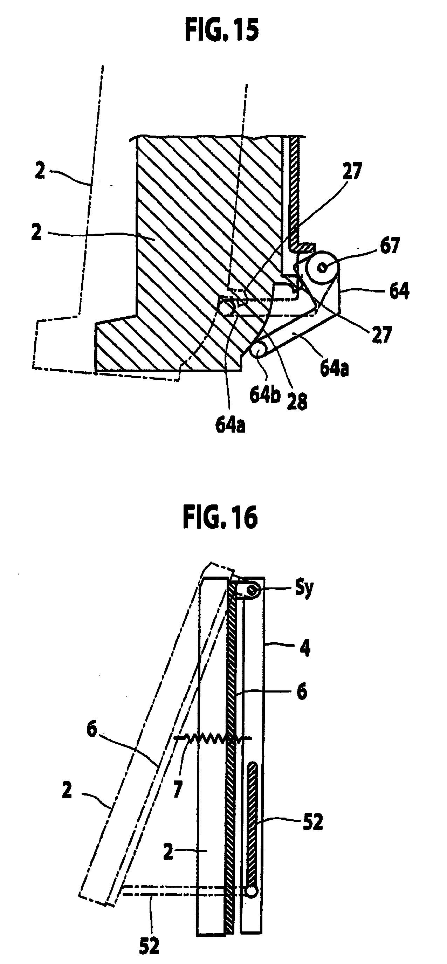

As illustrated in Fig. 15, also the right and left auxiliary levers 64 are each respectively rotatively supported by an axle 67 fixed to the panel holder 6, and clockwise biased in Fig. 15 by an unshown spring. Each auxiliary lever 64 is bent forward to provide an arm portion 64a with a hooking tip 64b to be brought into engagement with a corresponding projection 27 of the panel 2 when the lock lever 63 is unlocked.

That is, to prevent the panel 2 from being dropped off, the projection 27 is supported on the hooking tip 64b of the arm portion 64a abutting on and pushing forward a lower portion of the panel 2. On the back face of the panel 2, there is a region for the hooking tip 64b of the arm portion 64a to be brought into slidable contact therewith under each projection 27, where the surface describes an arcuate convex plane 28, allowing for a smooth engagement of the hooking tip 64b with the projection 27.

The foregoing description is made of a specific example of the embodiment, and in no way restrictive. For instance, the movable base 4 may well be configured as a stationary base fixed to a front side of the equipment casing main body 1, with a holder drive mechanism 5 mounted thereon, including a pair of operational plates 52 adapted to lie and stand, thereby causing a panel 2 held by a panel holder 6 to pivot about pivotal shafts Sy, allowing for the orientation of a panel face to be changed vertically or sideways.

Further, the holder drive mechanism 5 is not always required to have a pair of operational plates 52. For instance, as illustrated in Fig. 16, there may well be a single operational plate 52 adapted to lie and stand and disposed at a side of one edge of a movable base (or stationary base) 4, subject to provision of a pair of pivotal shafts Sy at the side of other edge, and arrangement of a panel holder 6 linked for pivotal motions about the pivotal shafts Sy, permitting the panel holder 6 to pivot about the pivotal shafts Sy in accordance with lying and standing motions of the operational plate 52.

According to the embodiment illustrated in Fig. 16, the pivotal shafts Sy may extend in a transverse direction, allowing for the orientation of panel face of the panel 2 held by the panel holder 6 to be changed in a vertical direction, or the pivotal shafts Sy may extend in a vertical direction, allowing for the orientation of panel face to be changed in a transverse direction For the embodiment illustrated in Fig. 16, the base 4 and the panel holder 6 may preferably be connected by a pulling spring 7, affording to restore the panel holder 6 to an original position as the operational plate 52 lies.

The panel 2 is assumed as an LCD panel in the foregoing embodiments, but it is not limited thereto according to the present invention, and may be a planer speaker (a panel-shape speaker), or an operation panel such as that having switch knobs or buttons.

As will be seen from the foregoing embodiments, according to the present invention, a panel holder configured to hold a panel is pivotally connected to a movable base adapted to pivot about first pivotal shafts, through second pivotal shafts perpendicular to the first pivotal shafts, and a holder drive mechanism arranged on the movable base is configured for the panel holder to pivot about the second pivotal shafts, allowing for a panel face once oriented either vertically or sideways to be oriented, with that orientation left as it is, in another direction. Accordingly, even for an electronic equipment with panel having an equipment casing main body fixed to a center console in an automobile for instance, the panel face can be oriented upwardly rightward or upwardly leftward with ease for a favorable acquisition of panel output (a visual contact of picture or hearing of audio) such as from a driver's seat or front passenger's seat, simultaneously permitting favorable operations as necessary.

Moreover, possible simultaneous pivots of the movable base and the panel holder permit a swift change of panel face orientation to a desirable direction.

Further, provision of a holder drive mechanism mounted on a movable base or a stationary base permits a facilitated assembly of a unit as a combination of the holder drive mechanism and the movable or stationary base to electronic equipment, while the holder drive mechanism includes operational plates adapted to lie and stand between a panel holder and the movable or stationary base, affording for the panel holder holding a panel to pivot in accordance with the lying and standing motions, thus allowing for a thin and compact structure of an entirety of a panel attitude changing system.

In addition, as the panel has a display portion for image display, even in application to those of which a display portion has a narrow visible angle, the display portion can provide a favorable vision of display image at a quite opposite direction, and as the panel is detachably attachable to the panel holder, the panel can be post-assembled to prevent the panel from being injured in a course of equipment production or assemblage.

While preferred embodiments of the present invention have been described using specific terms, such description is for illustrative purposes, and it is to be understood that changes and variations may be made without departing from the scope of the following claims.

## Claims

1. A panel attitude changing system **characterized by**:
a movable base (4) adapted to pivot about first pivotal shafts (Sx);
a panel holder (6) configured to hold a panel (2) and pivotally connected to the movable base (4) through second pivotal shafts (Sy) perpendicular to the first pivotal shafts (Sx); and
a holder drive mechanism (5) arranged on the movable base (4) and configured for the panel holder (6) to pivot about the second pivotal shafts (Sy).

2. The panel attitude changing system according to claim 1, **characterized in that** the holder drive mechanism (5) comprises operational plates (52) adapted to lie and stand between the movable base (4) and the panel holder (6), a rotary drive source (53) configured to generate power for the operational plates (52) to lie and stand, and a power train (54) configured for transmission of power with conversion of rotary motions of the rotary drive source (53) to lying and standing motions of the operational plates (52), and is adapted, as an operational plate (52) stands with power transmitted by the power train (54), for the panel holder (6) to pivot about the second pivotal shafts (Sy) to come out anteriorly at an end thereof the operational plate (52) is standing.

3. A panel attitude changing system **characterized by**:
a stationary base (4);
a panel holder (6) configured to hold a panel (2) and pivotally connected to the stationary base (4) through pivotal shafts (Sy); and
a holder drive mechanism (5) arranged on the stationary base (4) and configured for the panel holder (6) to pivot about the pivotal shafts (Sy),
the holder drive mechanism (5) comprising operational plates (52) adapted to lie and stand between the stationary base (4) and the panel holder (6), a rotary drive source (53) configured to generate power for the operational plates (52) to lie and stand, and a power train (54) configured for transmission of power with conversion of rotary motions of the rotary drive source (53) to lying and standing motions of the operational plates (52),
the holder drive mechanism (5) being adapted, as an operational plate (52) stands with power transmitted by the power train (54), for the panel holder (6) to pivot about the pivotal shafts (Sy) to come out anteriorly at an end thereof the operational plate (52) is standing.

4. The panel attitude changing system according to any one of claims 1 to 3, **characterized in that** the panel (2) has a display (21) adapted to display a frame of image, and is detachably attached to the panel holder (6).

5. An electronic equipment **characterized by** the panel attitude changing system according to any one of claims 1 to 4, with the panel (2) positioned at an end of an equipment casing main body (1).
